# EUROPEAN PATENT SPECIFICATION

(11) **EP 3 632 809 B1**
(45) Date of publication and mention of the grant of the patent: **12.10.2022**
(21) Application number: 18198881.7
(22) Date of filing: 05.10.2018
(51) Int. Cl.: B65D 25/16, B65D 83/08, B64F 1/36, G01V 5/00, G01N 23/02

(54) **METHOD FOR SECURITY INSPECTION AND KIT OF PARTS WITH A DETACHABLE SINGLE-USE INLAY FOR AN X-RAY TRAY**
VERFAHREN ZUR SICHERHEITSINSPEKTION UND KIT VON TEILEN MIT EINER ABNEHMBAREN EINWEGEINLAGE FÜR EIN RÖNTGEN-TRAY
PROCÉDÉ D'INSPECTION DE SÉCURITÉ ET KIT DE PIÈCES AVEC INCRUSTATION À USAGE UNIQUE DÉTACHABLE DESTINÉE À UN PLATEAU À RAYONS X

(43) Date of publication of application: 08.04.2020
(73) Proprietor: González Marín, Saray, 65719 Hofheim am Taunus (DE); Melz, Eckhard Edelbert, 65719 Hofheim am Taunus (DE)
(72) Inventor: González Marín, Saray, 65719 Hofheim am Taunus (DE); Melz, Eckhard Edelbert, 65719 Hofheim am Taunus (DE)
(74) Representative: Metten, Karl-Heinz

(56) References cited:
- CN-A- 106 165 023
- US-A- 4 932 556
- US-A1- 2002 150 714
- US-A1- 2012 074 149
- US-B1- 7 012 525

## Description

This disclosure relates to a method for security inspection of baggage and/or personal items. This disclosure also relates to a kit of parts with a detachable single-use inlay and an X-ray tray of a security check at an airport. It also relates to the single-use inlay as such. Furthermore, this disclosure relates to a use of said kit of parts and/or single-use inlay for the prevention of transfer of pathogenic agents.

The dangers of pathogenic agents are well known in the art. Airports and railway stations are hubs for spreading various kinds of diseases as many passengers from different locations come in close contact in one place. Passengers usually transfer pathogenic agents directly by person-to-person contact and droplet spread or indirectly by contact with contaminated objects.

WO 2015 041 619 A1 relates to the prevention of the mass spread of infectious microbes at baggage conveyors available in public areas by applying an antibacterial cast and solvent foil on the surfaces of baggage conveyor belts. US 2012/074149 A1 discloses a method and kit of parts used for security inspection of baggage and/or personal items.

Other common measures to avoid a transfer of pathogenic agents include washing hands, wearing gloves or other protection equipment, and regularly wiping surfaces. It was found that some of these measures are difficult to implement during travel and others are not as effective as intended.

The present disclosure aims at decreasing the danger of spreading diseases at airports or other public or private facilities. One object is to provide improved methods and a kit of parts for preventing an indirect transfer of pathogenic agents. It is another object to provide methods and a kit of parts that allow a high throughput of passengers in spite of said countermeasures to prevent spreading of pathogenic agents, i.e., said countermeasures are practicable without significant loss of time.

This disclosure relates to a method for security inspection of baggage and/or personal items according to claim 1.

According to some embodiments, the method further comprises the step(s) of:
g. disposing of said single-use inlay in a waste container, in particular for recycling; and/or
h. crushing, melting and/or shredding of the single-use inlay, in particular wherein the material of the single-use inlay is recycled.

According to the invention the polymer layer is an elastic polymer layer which is secured to the X-ray tray by stretching it over an, in particular protruding, edge of said X-ray tray, wherein said polymer layer contracts at or below said edge on an exterior side of the X-ray tray.

Hereinafter a kit of parts is described in claim 4 according to the invention.

According to some embodiments the detachable single-use inlay comprises a protective cover and has a compressed state in which the polymer layer is compressed, in particular folded, within said protective cover, and a decompressed state, in which the polymer layer is decompressed, in particular unfolded.

According to some embodiments in the compressed state the length and width of the single-use inlay is reduced by at least 50%, in particular by at least 75%, preferably by at least 90%, and/or in the compressed state the length and width of the single-use inlay is smaller than 10 cm, preferably smaller than 5 cm.

According to some embodiments the polymer layer is a non-adhesive detachable layer that is attachable by stretching said essentially circumferential fringe area over the edges of said X-ray tray.

According to some embodiments the polymer layer is watertight.

According to the invention the polymer layer comprises or is a polymer foil made of polyethylene or polypropylene, preferably chlorinated polyethylene or chlorinated polypropylene.

According to some embodiments the polymer layer has an average material strength of 10 to 200 µm, preferably an average material strength of 20 to 100 µm, particularly preferred an average material strength of 30 to 70 µm.

According to the invention the essentially circumferential fringe area comprises an elastic band.

According to some embodiments the polymer layer is coated on the outer and/or inner side with an antibacterial composition and/or an antibacterial composition is part of the material of the polymer layer.

According to some embodiments the polymer layer is transparent for X-rays and/or visible light.

The disclosure also relates to a single-use inlay as described above that is adapted for an X-ray tray, in particular an X-ray tray as described for the kit of parts.

The disclosure also relates to a use of said kit of parts and/or single-use inlay as described above to prevent the transfer of pathogenic agents from an X-ray tray of a security check to baggage and/or personal items.

Some embodiments relate to the use of said kit of parts and/or single-use inlay during X-ray screening in an airport of baggage and/or personal items disposed in the X-ray tray on the single-use inlay.

Security checks are known in the art, e.g. from airports or when entering a building that contains sensitive information. Often security checks comprise a narrow passage where passengers are scanned. Baggage and/or personal items are usually scanned separately, e. g. using an X-ray scanner of comparatively high intensity. The security check may be a security gate for checking baggage and/or personal items in search for weapons, drugs, bombs or other prohibited items using said X-ray scanner. The present disclosure helps in preventing a transmission of pathogenic agents in this specific field from an X-ray tray to baggage and/or personal items and also from baggage and/or personal items to an X-ray tray.

It was found that with the above described single-use inlay, a transfer from bacteria from the X-ray tray commonly used at security checks can be prevented. Said X-ray trays are provided to dispose baggage and/or personal items therein when they are transported, e.g. on a conveyor belt, and scanned using X-ray based scanning machines. Said X-ray trays are touched by hundreds if not thousands of passengers. Shoes are put into said X-ray trays and have pathogenic agents attached to the shoe soles. Multiple personal items, such as used handkerchiefs, money, belts, jackets, tablets, laptops and watches are disposed in said X-ray trays. The result is that said X-ray trays may inevitably be heavily contaminated with pathogenic agents. The detachable single-use inlay may be used to prevent a transfer of pathogenic agents from the X-ray trays to baggage and/or personal items or vice versa. An X-ray tray in accordance with this disclosure relates to a tray for baggage and/or personal items that is used for transporting said baggage and/or personal items through an X-ray based scanning machine, i.e., a tray adapted for the X-ray based scanning process. Often a plastic tray of suitable size is made use of. Trays made solely out of metal often cannot be used as they may prevent X-ray detection of dangerous items within baggage or dangerous personal items using said X-ray based scanning machine.

In an example, the X-ray tray may be any kind of transport tray suitable for transporting baggage and/or personal items through a X-ray baggage scanner, in particular a plastic transport tray of suitable size for baggage.

In some embodiments the method is a method for security inspection of passenger's baggage and/or personal items at an airport. It may also be a method for security inspection at an entrance of a school, courthouse, football stadium, soccer stadium, railway station or any other public buildings or areas that may require enhanced security, in particular where there is an increased danger of terrorist attacks and/or where large groups of people come together. It may also be implemented at private facilities, in particular private facilities which are not accessible to the general public.

In some embodiments of the method after disposing of the single-use inlay the method comprises the step of crushing, melting and/or shredding of the single-use inlay, in particular wherein the material of the single-use inlay is recycled.

In some embodiments the method step e. can include that a security office checks the baggage manually prior to removing said baggage and/or personal items from said single-use inlay. Preferably the inlay stay connected to said x-ray tray during this checking. It is also possible that the baggage and/or personal items is scanned a second time prior to removing said baggage and/or personal items.

Hereinafter a kit of parts is described. Although various combinations of single-use inlays and X-ray trays are in principle suitable for the above described method, in various embodiments in step b. the detachable single-use inlay and the X-ray tray is said kit of parts as described hereinafter. It was found that said kit of parts combines well with the method and provides improved results. It should be noted that in step b. the single-use inlay is attached to the X-ray tray. For the kit of parts it is also possible that the single-use inlay may be attached to the X-ray tray. However, it is furthermore possible to provide them separately as kit of parts, wherein the user has to attach the single-use inlay when the kit of parts is made us of for its intended purpose.

The present discloser also relates to a kit of parts that comprises a detachable single-use inlay and an X-ray tray, in particular an X-ray tray having a deposition area and adapted for a security check at an airport or other public facility, the detachable single-use inlay comprising an, in particular flexible polymer layer having an outer side and an inner side, wherein the polymer layer has an essentially circumferential fringe area adapted to grasp and/or cover the edges of said X-ray tray.

According to some embodiments of said kit of parts the detachable single-use inlay comprises a protective cover and has a compressed state in which the polymer layer is compressed, in particular folded and/or detached from the X-ray tray, within said protective cover, and a decompressed state, in which the polymer layer is decompressed, in particular unfolded and/or attached to said X-ray tray. It is in one embodiment of the method envisioned that prior to step b., in particular between step a. and b., the single-use inlay is decompressed in the above described manner.

In an embodiment, said protective cover may also comprise a second polymer layer or even a third polymer layer. If multiple X-ray trays are made use of it is beneficial to have more polymer layers.

In said compressed state the length and width of the single-use inlay may be reduced by at least 50% in particular by at least 75%, preferably by at least 90% compared to its size when expanded. Alternatively or additionally in said compressed state, the length and width may be smaller than 10 cm, preferably smaller than 5 cm. The thickness of said single-use inlay in the compressed state is preferably below 3 cm or even below 1 cm. Compression is usually achieved by folding the polymer layer, e.g. a compression of 50% may achieved by folding it once. To achieve a compression of 90%, multiple folding may be necessary. Also size can be reduced by simply crumpling the polymer layer. If the length and width of the single-use inlay is referred to then this means the length and width in its current state, i.e., a single-use inlay comprising a folded polymer layer has a smaller length and width than when said polymer layer is fully expanded.

In an embodiment, said protective cover of the kit of parts may have substantially rectangular dimensions when the single-use inlay is in the compressed state. The protective cover may be a plastic bag comprising the polymer layer, in particular a gastight plastic bag.

In some embodiments of the kit of parts the protective cover may be attached to the polymer layer. This is not always necessary, but may facilitate disposal of said protective cover. Once the single-use inlay is discarded, e.g. in a waste bin for recycling, the protective cover is automatically recycled with the polymer layer. In other embodiments the polymer layer is separated from the protective cover and they may be disposed of together or separately.

In some embodiments of the kit of parts the protective cover is formed from the same material as the polymer layer. This is particularly suitable, when recycling of the waste is intended. In said case recycling is facilitated.

In some embodiments of the kit of parts the entire single-use inlay consists of one single material. Said material may be one of the polymers discussed in this disclosure.

In some embodiments of the kit of parts the single-use inlay may comprise an imprint, such as a trade mark of a producer or a logo.

In some embodiments of the kit of parts in the compressed state the polymer layer is vacuum-packed within the protective cover. This reduces the amount of contamination within the protective cover. Many pathogenic agents need air and/or water to survive and remain infective. Also if the protective cover is opened or a seal of the protective cover is broken, air enters and the vacuum is destroyed. This can be visibly observed by an expansion of the single-use inlay and the surrounding protective cover. The user gets a warning if the single-use inlay is not safe to use any more due to possible contamination of the inner side said single-use inlay.

In some embodiments of the kit of parts in the compressed state the polymer layer is contained in a gastight protective cover. Said gastight protective cover may be used to maintain a vacuum. However, it is also possible to use a gas, e.g. an inert gas or purified pathogen free air, to prevent any contamination of the interior of the protective cover, i.e., of the single-use inlay within the protective cover.

In some embodiments of the kit of parts the polymer layer is a non-adhesive detachable layer that is attachable by stretching said essentially circumferential fringe area over the edges of said X-ray tray. It was found that this provides a quick and secure attachment. If the attachment is not sufficiently secure there is a danger that the protective cover will detach and the interior may be contaminated by pathogenic agents on the surface of the X-ray tray. Also this way of attachment usually can be applied very fast. At security checks a high number of people have to be processed and the transfer of baggage and/or personal items within X-ray trays is a bottleneck for the numbers of people that are checked per minute. It is in some situations crucial that the single-use inlay can be applied as fast as possible, i.e., within a few seconds. A similar principle is known from bed sheets, where fitted sheets can be applied faster than regular sheets.

In some examples not according to the invention of the kit of parts the paper and/or polymer layer is a non-textile layer. It may be that the paper and/or polymer layer is a paper layer. Said paper layer may have a thickness of less than 100 µm. Also a polymer layer is possible. Said polymer layer may be an elastic layer. It may also have a thickness of less than 100 µm.

In some embodiments of the kit of parts the polymer layer is watertight. This prevents a transfer of contaminated liquid form the X-ray tray to the baggage and/or personal items disposed on the single-use inlay.

In some embodiments of the kit of parts the single-use inlay has an opening. The shape of said opening may be defined by the essentially circumferential fringe area. The opening may be elastic and in some embodiments can change its size to fit over a circumferential edge of said X-ray tray.

In some embodiments of the kit of parts the single-use inlay clutches the X-ray tray due to its elastic properties, in particular due to an elastic band.

The X-ray trays may in some embodiments have a width of 30 to 50 cm and a length of 40 to 60 cm, wherein the length is preferably at least 5 to 10 cm larger than the width. In some embodiments the height is 6 to 20 cm, in particular 7,5 to 15 cm. The single-use inlay may be adapted to fit multiple sizes, in particular the aforementioned dimensions.

The X-ray tray may contain an RFID card.

The X-ray tray may be injection-molded.

The X-ray tray may consist to at least 90% (w/w), in particular to at least 95% (w/w), of a polymer composition. In some embodiments polypropylene is a preferred material for said X-ray tray.

According to the invention of the kit of parts the polymer layer comprises or is a polymer foil made of polyethylene or polypropylene, preferably chlorinated polyethylene or chlorinated polypropylene.

In some embodiments of the kit of parts the single-use inlay may have a total weight of less than 100 g, in particular less than 25 g, preferably less than 10 g. It was found that very little material is required for a sufficient protection barrier.

In some embodiments of the kit of parts the polymer layer may have an average material strength of 10 to 200 µm, preferably of 20 to 100 µm, particularly preferred of 30 to 70 µm.

According to the invention of the kit of parts the essentially circumferential fringe area comprises an elastic band. The elastic band may comprise the same material as the polymer layer. It also may be made from latex or any other suitable material. Said elastic band may be used to ensure a tight grasp at or below the edges of the X-ray tray.

In some embodiments of the kit of parts the polymer layer is coated on the outer and/or inner side, in particular on the inner side, with an antibacterial composition and/or an antibacterial composition is part of the material of the polymer layer.

In some embodiments the polymer layer may be transparent for X-rays. A transparency for X-ray helps in recognizing and scanning of baggage and/or personal items within the single-use inlay.

Alternatively or additionally the polymer layer may the transparent for visible light. This helps a security office to verify that no hidden objects are arranged below the single-use inlay.

The single-use inlay of the kit of parts can be made of at least 90 % (w/w), in particular of at least 95% % (w/w), of the polymer layer. It may also be that the single-use inlay is made up entirely from said polymer layer.

In some embodiments of the kit of parts the single-use inlay is single-layered or comprises an area that constitutes at least 55% of the total area of the single-use inlay that is single-layered. The essentially circumferential fringe area may also surround a single-layered area of the single-use inlay, wherein the essentially circumferential fringe area may be single layered as well or may have more than one layer.

In some embodiments of the kit of parts the single-use inlay has an outer side and/or inner side that is skid-resistant. Said outer side and/or inner side may comprise patterns or grooves, e.g. a diamond pattern or concentric grooves.

Various embodiments of the kit of parts were described above.

The disclosure also relates to the use of a single-use inlay as described above to prevent the transfer of pathogenic agents from an X-ray tray of a security check to baggage and/or personal items.

The disclosure also relates to the use of a single-use inlay as described above to during X-ray screening in an airport of baggage and/or personal items disposed in the X-ray tray on the single-use inlay, in particular when used to prevent the transfer of pathogenic agents from an X-ray tray of a security check to baggage and/or personal items.

In the figures:
- Figure 1: shows a schematic top down view of a a security check at an airport;
- Figure 2: shows a user who applies the detachable single-use inlay at a security check;
- Figure 3: shows a perspective view of an X-ray tray as used at a security check at an airport;
- Figure 4: shows a perspective view of an embodiment of a detachable single-use inlay;
- Figure 5: shows a schematic view of another embodiment, which is not according to the invention, of a detachable single-use inlay;
- Figure 6: shows a schematic view of another embodiment of a detachable single-use inlay;
- Figure 7: shows a perspective view of an embodiment of a detachable single-use inlay attached to X-ray tray as used at a security check at an airport;
- Figure 8: shows a schematic view of a compressed state in which the polymer layer is compressed within an protective cover; and
- Figure 9: shows a schematic view of the method for security inspection of baggage and/or personal items.

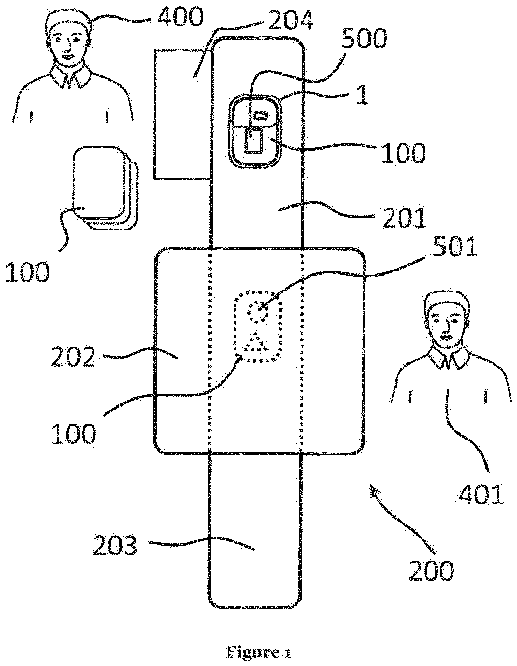

Figure 1 shows a schematic view of a security check 200 at an airport. A passenger 400 may take an X-ray tray 100 from a staple, places it on the desk 204 and attach the single-use inlay 1. Figure 1 shows the situation of the next step, wherein the X-ray tray 100 with the attached single-use inlay 1 and containing personal items 500 on said inlay 1 is placed on the conveyor belt 201 that goes into the X-ray baggage scanner 202. A security officer 401 scans another X-ray tray 100 comprising baggage 501 using X-rays. The single-use inlay is not visible as X-rays are not impeded by the single-use inlay of this embodiment. A leaving conveyor belt 203 may transport each X-ray tray 100 out of said X-ray baggage scanner.

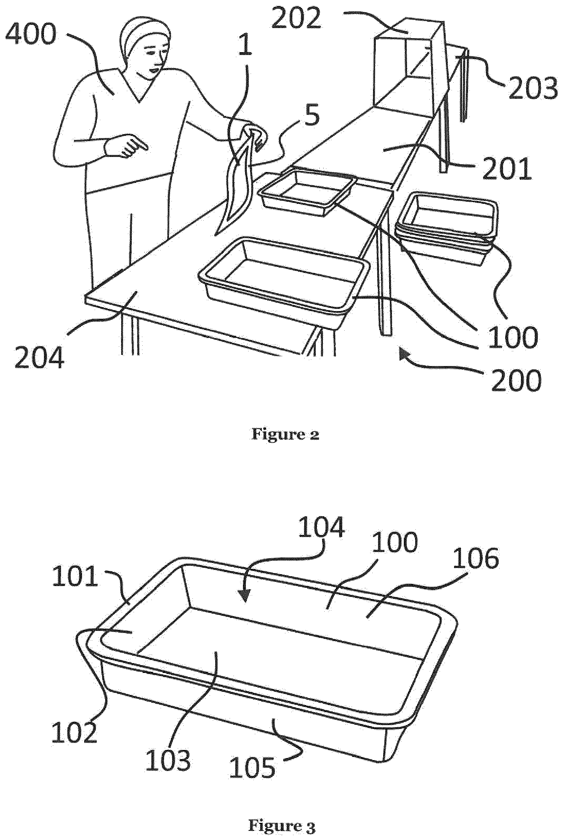

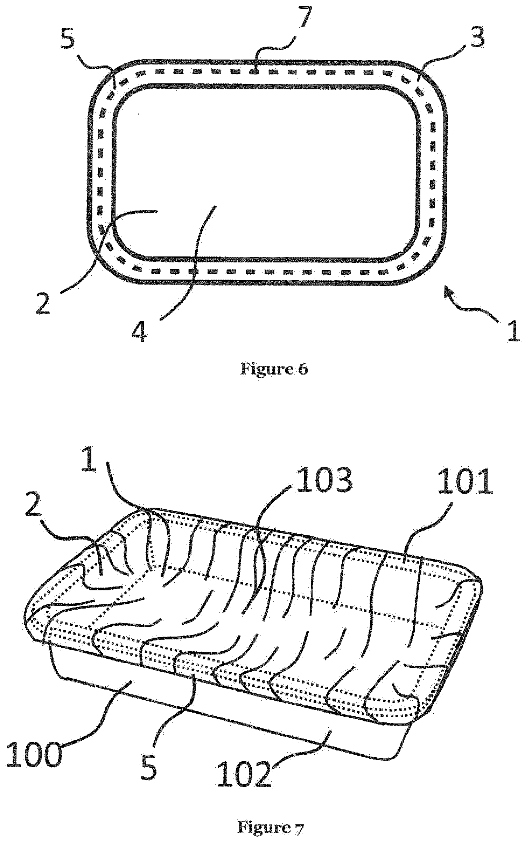

Figure 2 shows a perspective view of a security check 200 at an airport, wherein a passenger 400 is shown, who starts to attach a single-use inlay 1 having an essentially circumferential fringe area 5 to the foremost X-ray tray 100. During this procedure, the X-ray tray 100 may be placed on a table 204. Once the single-use inlay 1 is attached and baggage and/or personal items have been filled into the X-ray tray 100, it is transported through the X-ray baggage scanner 202 using conveyor belts 201 and 203. In Figure 7 it can be seen how the single-use inlay 1 looks like once it has been attached by said passenger 400.

Figure 3 shows a perspective view of an X-ray tray 100 having side walls 102, a bottom 103 and a protruding circumferential edge 101. Said side walls 102 and the bottom 103 define a deposition area 104. The X-ray tray 100 has an exterior side 105 and an interior side 106.

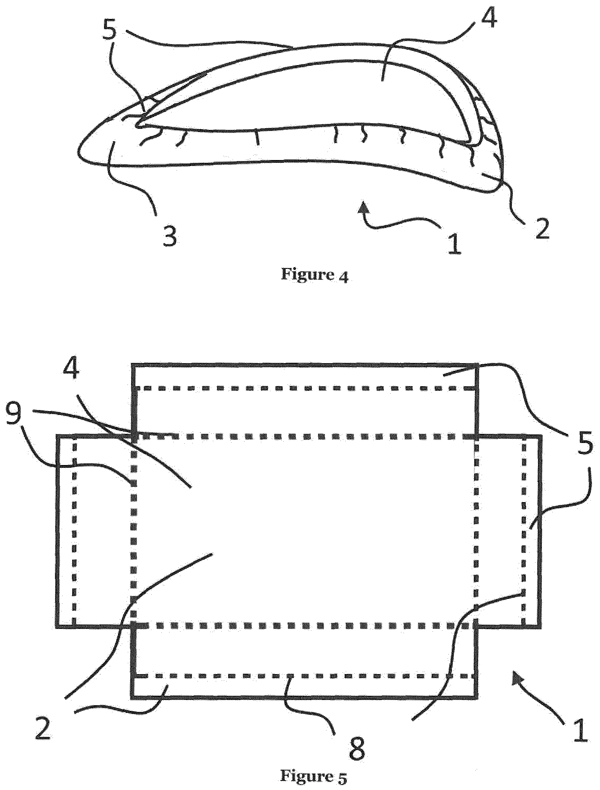

Figure 4 shows a perspective view of a single-use inlay 1 which is decompressed and detached from any X-ray tray. Said detachable single-use inlay 1 for an X-ray tray comprises a polymer layer 2 having an outer side 3 and an inner side 4, wherein the polymer layer 2 has an essentially circumferential fringe area 5 adapted to grasp and/or cover the edges of an X-ray tray as shown in Figure 3. According to the invention the inlay comprises an elastic polymer layer.

Not according to the invention, figure 5 shows a schematic view of a single-use inlay which is decompressed and detached from any X-ray tray. Said detachable single-use inlay 1 for an X-ray tray comprises a paper layer 2 having an outer side (not shown) and an opposing inner side 4, wherein the paper layer 2 has an essentially circumferential fringe area 5 adapted to grasp and/or cover the edges of an X-ray tray as shown in Figure 3. Within the embodiment of figure 5, folding lines 9 separate the bottom from the side walls and folding lines 8 define the essentially circumferential fringe area 5. This embodiment is non-elastic and not according to the invention.

Figure 6 shows a schematic view of a single-use inlay 1 which is decompressed and detached from any X-ray tray. Said detachable single-use inlay 1 for an X-ray tray comprises a polymer layer 2 having an outer side 3 and an inner side 4, wherein the polymer layer 2 has an essentially circumferential fringe area 5 adapted to grasp and/or cover the edges of an X-ray tray as shown in Figure 3. Said essentially circumferential fringe area 5 comprises an elastic band 7, which is integrated into the fringe area.

Figure 7 shows a perspective view of a detachable single-use inlay 1 within an X-ray tray 100, wherein the polymer layer 2 has an essentially circumferential fringe area 5 that grasps and covers the edge 101 of said X-ray tray 100. Said X-ray tray 100 has side walls 102, a bottom 103 and a protruding circumferential edge 101.

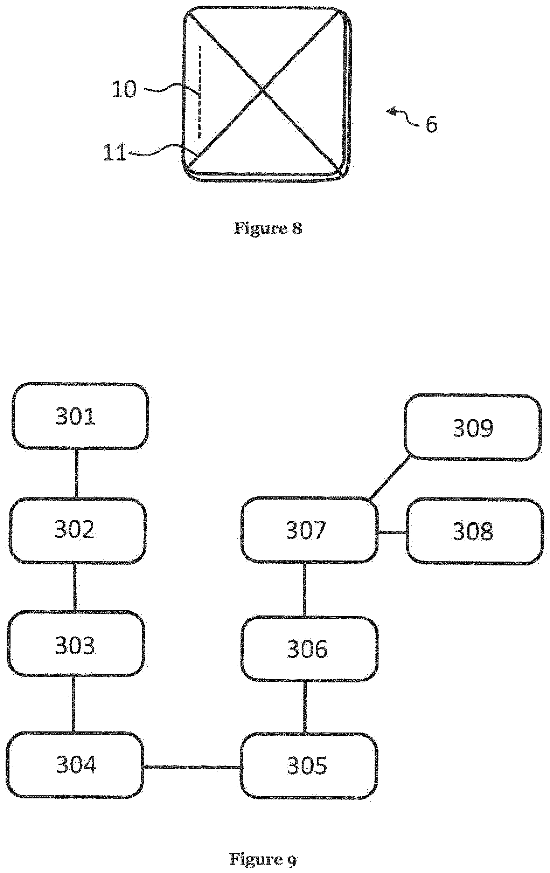

Figure 8 shows a perspective view of a protective cover 6 in which the polymer layer of the single-use inlay 1 may be folded or crumpled in a compressed state, e.g. compressed by removing all air from within the protective cover 6. The protective cover 6 may be a bag containing the polymer layer on the inside. The protective cover 6 may comprise welding seams 11. It may also comprise weakened zones 10 for opening the protective cover 6.

Figure 9 shows a schematic view of the method for security inspection of baggage and/or personal items according to the disclosure. Said method comprises the steps of 301 providing an X-ray tray having a deposition area; 302 attaching a single-use inlay to said X-ray tray to cover said deposition area, 303 putting the baggage and/or personal items onto the single-use inlay, in particular without direct contact to the X-ray tray; 304 X-ray scanning said baggage and/or personal items disposed in said X-ray tray, wherein the X-ray tray is moved by at least one belt conveyor into and out of the scanning area; 305 removing the baggage and/or personal items from said single-use inlay; 306 detaching said single-use inlay from the X-ray tray; 307 disposing of said single-use inlay, in particular in a waste container; and 308 burning said single-use inlay or 309 recycling said single-use inlay.

## Claims

1. Method for security inspection of baggage and/or personal items (500, 501), the method comprising the steps of:
a. providing an X-ray tray (100) having a deposition area (104);
b. attaching an, in particular unused, flexible and/or elastic single-use inlay (1) to said X-ray tray (100) to cover said deposition area (104), said single-use inlay comprising a flexible polymer layer (2),
having an outer side (3) and an inner side (4),
wherein the polymer layer (2) has an essentially circumferential fringe area (5) adapted to grasp and/or cover the edges (101) of said X-ray tray (100),
wherein the essentially circumferential fringe area (5) comprises an elastic band and
wherein the polymer layer (2) is secured to the X-ray tray (100) by stretching it over an, in particular protruding, edge of said X-ray tray, wherein the polymer layer contracts at or below said edge on an exterior side of the X-ray tray;
c. putting the baggage and/or personal items (500, 501) onto the single-use inlay (1), in particular without direct contact to the X-ray tray (100);
d. X-ray scanning said baggage and/or personal items (500, 501) disposed in said X-ray tray (100), in particular wherein the X-ray tray (100) is moved by at least one belt conveyor (201, 203) into and out of the scanning area (202);
e. removing the baggage and/or personal items (500, 501) from said single-use inlay (1); and
f. detaching said single-use inlay (1) from said X-ray tray (100).

2. Method for security inspection according to claim 1, wherein the method further comprises
g. disposing of said single-use inlay (1) in a waste container; and/or
h. crushing, melting and/or shredding of the single-use inlay, in particular
wherein the material of the single-use inlay is recycled.

3. Method for security inspection according to claim 1 or 2, wherein
in step b. the detachable single-use inlay (1) and the X-ray tray (100) is a kit of parts in accordance with any of the claims 4 to 12, or
in step b. the detachable single-use inlay (1) is a single-use inlay (1) as described in any of the claims 4 to 12.

4. Kit of parts comprising
a detachable single-use inlay (1) and
an X-ray tray (100) having a deposition area (104) adapted for a security check (200) at an airport or other public or private facility,
the detachable flexible and/or elastic single-use inlay (1) comprising a flexible polymer layer (2),
wherein the polymer layer (2) comprises or is a polymer foil made of polyethylene or polypropylene or an ethylene copolymer or a propylene copolymer,
having an outer side (3) and an inner side (4),
wherein the polymer layer (2) has an essentially circumferential fringe area (5) which comprises an elastic band and which is adapted to grasp and/or cover the edges (101) of said X-ray tray (100), and
wherein the polymer layer (2) is adapted to be secured to the X-ray tray (100) by stretching it over an, in particular protruding, edge of said X-ray tray, and to be contracted at or below said edge on an exterior side of the X-ray tray.

5. Kit of parts according to claim 4, wherein
the detachable single-use inlay (1) comprises a protective cover (6) and has a compressed state in which the polymer layer (2) is compressed within said protective cover (6) as well as a decompressed state, in which the polymer layer (2) is decompressed.

6. Kit of parts according to claim 5, wherein
in the compressed state the length and width of the single-use inlay is reduced by at least 50%, in particular by at least 75% and/or wherein in the compressed state the length and width is smaller than 10 cm, preferably smaller than 5 cm.

7. Kit of parts according to any of the claims 4 to 6, wherein
the polymer layer (2) is a non-adhesive detachable layer that is attachable by stretching said essentially circumferential fringe area (5) over the edges of said X-ray tray (100).

8. Kit of parts according to any of the claims 4 to 7, wherein
the polymer layer (2) is watertight.

9. Kit of parts according to any of the claims 4 to 8, wherein
the polymer layer (2) comprises or is a polymer foil made of chlorinated polyethylene or chlorinated polypropylene,

10. Kit of parts according to any of the claims 4 to 9, wherein
the polymer layer (2) has an average material strength of 10 to 200 µm, preferably 20 to 100 µm.

11. Kit of parts according to any of the claims 4 to 10, wherein
the polymer layer (2) is coated on the outer and/or inner side (3, 4) with an antibacterial composition or
wherein an antibacterial composition is part of the material of the polymer layer.

12. Kit of parts according to any of the claims 4 to 11, wherein
polymer layer (2) is transparent for X-rays and/or visible light.

13. Use of a Kit of parts according to any of the claims 4 to 12 to prevent the transfer of pathogenic agents from an X-ray tray of a security check to baggage and/or personal items.

## Patentansprüche

1. Verfahren zur Sicherheitsinspektion von Gepäck und/oder persönlichen Gegenständen (500, 501), wobei das Verfahren die folgenden Schritte umfasst:
a. Bereitstellen eines Röntgentrays (100) mit einem Ablagebereich (104);
b. Anbringen einer, insbesondere unbenutzten, flexiblen und/oder elastischen Einwegeinlage (1) an dem Röntgentray (100), um den Ablagebereich (104) abzudecken, wobei die Einwegeinlage eine flexible Polymerschicht (2) umfasst, die eine Außenseite (3) und eine Innenseite (4) aufweist,
wobei die Polymerschicht (2) einen im Wesentlichen umlaufenden Randbereich (5) aufweist, der dazu geeignet ist, die Kanten (101) des Röntgentrays (100) zu greifen und/oder zu bedecken, wobei der im Wesentlichen umlaufende Randbereich (5) ein elastisches Band umfasst, und
wobei die Polymerschicht (2) an dem Röntgentray (100) durch Spannen desselben über eine, insbesondere vorstehende, Kante des Röntgentrays befestigt wird, wobei sich die Polymerschicht an oder unter der Kante an einer äußeren Seite des Röntgentrays zusammenzieht;
c. Legen des Gepäcks und/oder der persönlichen Gegenstände (500, 501) auf die Einwegeinlage (1), insbesondere ohne direkten Kontakt mit dem Röntgentray (100);
d. Röntgen-Scannen des Gepäcks und/oder der persönlichen Gegenstände (500, 501), die in dem Röntgentray (100) angeordnet sind, wobei das Röntgentray (100) insbesondere von mindestens einem Förderband (201, 203) in den und aus dem Scan-Bereich (202) bewegt wird;
e. Entfernen des Gepäcks und/oder der persönlichen Gegenstände (500, 501) aus der Einwegeinlage (1); und
f. Abnehmen der Einwegeinlage (1) von dem Röntgentray (100).

2. Verfahren zur Sicherheitsinspektion nach Anspruch 1, wobei das Verfahren ferner umfasst:
g. Entsorgen der Einwegeinlage (1) in einem Abfallbehälter; und/oder
h. Zerquetschen, Einschmelzen und/oder Zerkleinern der Einwegeinlage, wobei das Material der Einwegeinlage insbesondere recycelt wird.

3. Verfahren zur Sicherheitsinspektion nach Anspruch 1 oder 2, wobei in Schritt b. die abnehmbare Einwegeinlage (1) und das Röntgentray (100) ein Kit-of-parts nach einem der Ansprüche 4 bis 12 sind oder
in Schritt b. die abnehmbare Einwegeinlage (1) eine Einwegeinlage (1) nach einem der Ansprüche 4 bis 12 ist.

4. Kit-of-parts, umfassend
eine abnehmbare Einwegeinlage (1) und
ein Röntgentray (100) mit einem Ablagebereich (104), das für eine Sicherheitsinspektion (200) an einem Flughafen oder einer anderen öffentlichen oder privaten Einrichtung geeignet ist,
wobei die abnehmbare flexible und/oder elastische Einwegeinlage (1) eine flexible Polymerschicht (2) umfasst,
wobei die Polymerschicht (2) eine Polymerfolie umfasst oder ist, die aus Polyethylen oder Polypropylen oder einem Ethylen-Copolymer oder einem Propylen-Copolymer besteht, und eine Außenseite (3) und eine Innenseite (4) aufweist,
wobei die Polymerschicht (2) einen im Wesentlichen umlaufenden Randbereich (5) aufweist, der ein elastisches Band umfasst und der dazu geeignet ist, die Kanten (101) des Röntgentrays (100) zu greifen und/oder zu bedecken, und
wobei die Polymerschicht (2) dazu geeignet ist, an dem Röntgentray (100) durch Spannen desselben über eine, insbesondere vorstehende, Kante des Röntgentrays befestigt zu werden und sich an oder unter der Kante an einer äußeren Seite des Röntgentrays zusammenzuziehen.

5. Kit-of-parts nach Anspruch 4, wobei
die abnehmbare Einwegeinlage (1) eine Schutzabdeckung (6) umfasst und einen komprimierten Zustand, in dem die Polymerschicht (2) innerhalb der Schutzabdeckung (6) komprimiert ist, sowie einen dekomprimierten Zustand aufweist, in dem die Polymerschicht (2) dekomprimiert ist.

6. Kit-of-parts nach Anspruch 5, wobei
im komprimierten Zustand die Länge und die Breite der Einwegeinlage um mindestens 50 %, insbesondere um mindestens 75 %, reduziert sind und/oder wobei im komprimierten Zustand die Länge und die Breite kleiner als 10 cm, vorzugsweise kleiner als 5 cm, sind.

7. Kit-of-parts nach einem der Ansprüche 4 bis 6, wobei
die Polymerschicht (2) eine nichtklebende abnehmbare Schicht ist, die durch Spannen des im Wesentlichen umlaufenden Randbereichs (5) über die Kanten des Röntgentrays (100) angebracht wird.

8. Kit-of-parts nach einem der Ansprüche 4 bis 7, wobei
die Polymerschicht (2) wasserdicht ist.

9. Kit-of-parts nach einem der Ansprüche 4 bis 8, wobei
die Polymerschicht (2) eine Polymerfolie umfasst oder ist, die aus chloriertem Polyethylen oder chloriertem Polypropylen besteht.

10. Kit-of-parts nach einem der Ansprüche 4 bis 9, wobei
die Polymerschicht (2) eine durchschnittliche Materialstärke von 10 bis 200 µm, vorzugsweise 20 bis 100 µm, aufweist.

11. Kit-of-parts nach einem der Ansprüche 4 bis 10, wobei
die Polymerschicht (2) an der Außen- und/oder Innenseite (3, 4) mit einer antibakteriellen Zusammensetzung beschichtet ist oder
wobei eine antibakterielle Zusammensetzung Teil des Materials der Polymerschicht ist.

12. Kit-of-parts nach einem der Ansprüche 4 bis 11, wobei
die Polymerschicht (2) für Röntgenstrahlen und/oder sichtbares Licht transparent ist.

13. Verwendung eines Kit-of parts nach einem der Ansprüche 4 bis 12 zum Verhindern einer Übertragung von Krankheitserregern von einem Röntgentray einer Sicherheitsinspektion auf Gepäck und/oder persönliche Gegenstände.

## Revendications

1. Procédé d'inspection de sécurité de bagages et/ou d'effets personnels (500, 501), le procédé comprenant les étapes:
a. fournir un plateau à rayons X (100) présentant une zone de dépôt (104);
b. fixer une incrustation (1) à usage unique flexible et/ou élastique, en particulier inutilisée, audit plateau à rayons X (100) afin de recouvrir ladite zone de dépôt (104), ladite incrustation à usage unique comprenant une couche de polymère (2) flexible,
présentant un côté extérieur (3) et un côté intérieur (4),
la couche de polymère (2) présentant une zone de marge (5) sensiblement circonférentielle adaptée pour agripper et/ou recouvrir les bords (101) dudit plateau à rayons X (100), la zone de marge (5) sensiblement circonférentielle comprenant un ruban élastique et
la couche de polymère (2) étant fermement attachée au plateau à rayons X (100) en l'étirant par-dessus un bord, en particulier en saillie, dudit plateau à rayons X, la couche de polymère se contractant sur ou sous ledit bord sur un côté extérieur du plateau à rayons X ;
c. placer les bagages et/ou effets personnels (500, 501) sur l'incrustation (1) à usage unique, en particulier sans contact direct avec le plateau à rayons X (100) ;
d. balayer aux rayons X lesdits bagages et/ou effets personnels (500, 501 ) disposés dans ledit plateau à rayons X (100), le plateau à rayons X (100) étant en particulier déplacé par au moins une bande transporteuse (201, 203) dans la zone de balayage (202) et hors de celle-ci ;
e. retirer les bagages et/ou effets personnels (500, 501) de ladite incrustation (1) à usage unique ; et
f. détacher ladite incrustation (1) à usage unique dudit plateau à rayons X (100).

2. Procédé d'inspection de sécurité selon la revendication 1, dans lequel le procédé comprend en outre
g. jeter ladite incrustation (1) à usage unique dans un bac à ordures ; et/ou
h. écraser, fondre et/ou déchiqueter l'incrustation à usage unique, le matériau de l'incrustation à usage unique étant en particulier recyclé.

3. Procédé d'inspection de sécurité selon la revendication 1 ou 2, dans lequel
dans l'étape b., l'incrustation (1) à usage unique détachable et le plateau à rayons X (100) sont un kit de pièces selon une des revendications 4 à 12, ou
dans l'étape b., l'incrustation (1) à usage unique détachable est une incrustation (1) à usage unique telle que décrite dans une des revendications 4 à 12.

4. Kit de pièces comprenant
une incrustation (1) à usage unique détachable et
un plateau à rayons X (100) présentant une zone de dépôt (104), adapté pour un contrôle de sécurité (200) dans un aéroport ou autre équipement public ou privé, l'incrustation (1) à usage unique flexible et/ou élastique détachable comprenant une couche de polymère (2) flexible,
la couche de polymère (2) comprenant ou étant une feuille de polymère constituée de polyéthylène ou de polypropylène ou d'un copolymère d'éthylène ou d'un copolymère de propylène,
présentant un côté extérieur (3) et un côté intérieur (4),
la couche de polymère (2) présentant une zone de marge (5) sensiblement circonférentielle qui comprend un ruban élastique et qui est adaptée pour agripper et/ou recouvrir les bords (101) dudit plateau à rayons X (100), et
la couche de polymère (2) étant adaptée pour être fermement attachée au plateau à rayons X (100) en l'étirant par-dessus un bord, en particulier en saillie, dudit plateau à rayons X, et pour être contractée sur ou sous ledit bord sur un côté extérieur du plateau à rayons X.

5. Kit de pièces selon la revendication 4, dans lequel
l'incrustation (1) à usage unique détachable comprend une housse de protection (6) et présente un état comprimé dans lequel la couche de polymère (2) est comprimée dans ladite housse de protection (6) ainsi qu'un état décompressé, dans lequel la couche de polymère (2) est décompressée.

6. Kit de pièces selon la revendication 5, dans lequel
dans l'état comprimé, la longueur et la largeur de l'incrustation à usage unique sont réduites d'au moins 50 %, en particulier d'au moins 75 % et/ou dans lequel, dans l'état comprimé, la longueur et la largeur sont inférieures à 10 cm, de préférence inférieures à 5 cm.

7. Kit de pièces selon une des revendications 4 à 6, dans lequel
la couche de polymère (2) est une couche détachable non adhésive qui peut être fixée en étirant ladite zone de marge (5) sensiblement périphérique par-dessus les bords dudit plateau à rayons X (100).

8. Kit de pièces selon une des revendications 4 à 7, dans lequel
la couche de polymère (2) est étanche à l'eau.

9. Kit de pièces selon une des revendications 4 à 8, dans lequel
la couche de polymère (2) comprend ou est une feuille de polymère constituée de polyéthylène chloré ou de polypropylène chloré.

10. Kit de pièces selon une des revendications 4 à 9, dans lequel
la couche de polymère (2) présente une épaisseur moyenne de matériau de 10 à 200 µm, de préférence de 20 à 100 µm.

11. Kit de pièces selon une des revendications 4 à 10, dans lequel
la couche de polymère (2) est revêtue sur le côté extérieur et/ou intérieur (3, 4) avec une composition antibactérienne ou
dans lequel une composition antibactérienne fait partie du matériau de la couche de polymère.

12. Kit de pièces selon une des revendications 4 à 11, dans lequel
la couche de polymère (2) est transparente aux rayons X et/ou à la lumière visible.

13. Utilisation d'un kit de pièces selon une des revendications 4 à 12 pour empêcher le transfert d'agents pathogènes d'un plateau à rayons X d'un contrôle de sécurité vers des bagages et/ou effets personnels.
